# EUROPÄISCHE PATENTSCHRIFT

(11) **EP 2 254 405 B1**
(45) Veröffentlichungstag und Bekanntmachung des Hinweises auf die Patenterteilung: **28.12.2011**
(21) Anmeldenummer: 09722347.3
(22) Anmeldetag: 16.03.2009
(51) Int. Cl.: A01K 85/16

(54) **KÜNSTLICHER ANGELKÖDER**
ARTIFICIAL FISHING LURE
APPÂT ARTIFICIEL

(30) Priorität: 17.03.2008 DE 202008003755 U
(43) Veröffentlichungstag der Anmeldung: 01.12.2010
(73) Patentinhaber: Beyrich, Ekkehard, 91459 Markt Erlbach (DE)
(72) Erfinder: Beyrich, Ekkehard, 91459 Markt Erlbach (DE)
(74) Vertreter: Mielke, Klaus
(86) Internationale Anmeldenummer: PCT/EP2009/001925
(87) Internationale Veröffentlichungsnummer: WO 2009/115278

(56) Entgegenhaltungen:
- JP-A- 2004 073 148
- US-A- 6 158 161
- US-A1- 2006 042 147
- DATABASE WPI Week 199827 Thomson Scientific, London, GB; AN 1998-304894 XP002537609 & JP 10 108590 A (MEGABUS KK) 28. April 1998 (1998-04-28)

## Beschreibung

Die Erfindung betrifft einen künstlichen Angelköder mit einem Sinkkörper. Dieser weist einen vorderen Bereich auf, an dessen Ende Fangmittel anbringbar sind, z.B. ein Drilling. Weiterhin weist dieser einen hinteren Bereich auf, an dessen Ende Haltemittel anbringbar sind, besonders eine Angelschnur.

Angelköder sind vielfach bekannt. So wird z.B. ein besonders zum Angeln im Meer geeigneter künstlicher Köder als Pilker bezeichnet. Dieser weist ein von Wassertiefe und aktueller Strömung an der Angelstelle abhängiges Gewicht auf. Insbesondere beim Hochseeangeln werden Pilker mit einem Gewicht von z.B. 150 g bis zu mehreren Kilo eingesetzt. Beim Pilkangeln wird der Köder zunächst bis zum Meeresgrund abgelassen. Dann wird der Pilker zyklisch vom Grund z.B. um 1 - 2 m angehoben, um ihn dann wieder abtrudeln zu lassen. Während dieses Anhebens und Abtrudelns werden z.B. Druckwellen erzeugt, die Beutefische anlocken und zum Anbeißen reizen sollen.

Aus der WO 2005/043987 ist ein künstlicher Angelköder mit einer fischähnlichen Form bekannt, wobei die Angelschnur am Rücken des fischähnlichen Körpers angebracht ist. Der Rücken ist z.B. konvex gekrümmt, so dass der Körper beim Anziehen mittels einer Angelschnur beidseitige Kipp- und/oder Schwingungsbewegungen ausführt. Weiterhin ist aus der DE 29813458 U ein Asychronpilker bekannt. Dieser weist eine Wölbung über der oberen Fläche, eine Wölbung über einem Teil der unteren Fläche sowie eine Abplattung der unteren Wölbung auf. Der Massenschwerpunkt liegt im Kopfteil. Wegen der Wölbungen sowie der Abplattung entsteht beim Fischen am Köder eine Strömung, welche diesen in asynchrone Bewegungen versetzt.

Schließlich ist aus der DE 196 40 144 A1 ein Angelköder bekannt. Dieser besteht aus einem länglichen Körper mit einer in Längs- und Querrichtung konvexen Bodenfläche und einer ebenen Deckfläche. Der Körper hat in Draufsicht eine Tropfenform und im mittleren Längsschnitt ein angenähertes Flügelprofil mit der größten Profiltiefe im vorderen Drittel. Auf der Deckfläche befindet sich ein Aufsatz, in dem ein Schaft eines Angelhakens und die Enden eines quer verlaufenden Bügels zur verschiebbaren Halterung des Endes einer Angelschnur verankert sind. Auf dem Angelhaken ist ein Jigschwanz verankert, und im Körper befindet sich ein u.U. quer beweglicher Ballastkörper, insbesondere Ballastkugeln. Beim Fischen führt der Angelkörper eine schlingernde Bewegung mit Drehrichtungsumkehr um einen Drehpunkt aus, so dass ein Drehmoment in die eine bzw. andere Richtung einwirkt. Dabei gleitet das Ende der Angelschnur auf dem Bügel vom einen zum anderen Ende. Aus der JP 2004 073148 A ist ein künstlicher Angelköder gemäß dem Oberbegriff des unabhängigen Anspruchs 1 bekannt.

Bei Angelködern dieser Art tritt das Problem auf, dass die von den Kippund/oder Schwingungsbewegungen während des Anziehens verursachten Druckwellen relativ schwach sind, und somit nur eine geringe Reichweite haben. Es werden somit nur Beutetiere angelockt, welche sich in unmittelbarer Nähe des Köders aufhalten. Zudem weisen Köder dieser Art nur einen geringen Aktionsbereich auf, so dass der Benutzer auch versuchen muss, den Köder beim Anheben und Absenken über den Meeresgrund zu bewegen.

Der Erfindung liegt die Aufgabe zu Grunde einen künstlichen Angelköder der oben genannten Art weiter so zu verbessern, dass dieser einen größeren Fangbereich aufweist.

Die Aufgabe wird gelöst mit dem in Anspruch 1 angegebenen Angelköder. Vorteilhafte weitere Ausführungsformen der Erfindung sind in den Unteransprüchen angegeben.

Der erfindungsgemäße Angelköder weist einen Sinkkörper in Form eines stromlinienförmig gestreckten Hohlkörpers mit erster und zweiter Flachseite auf. Dabei sind die erste Flachseite auf der Außenseite zumindest im vorderen Bereich als eine Art Tragfläche ausgebildet und mit einem Sinkgewicht, und zumindest eine Flachseite mit Strömungsöffnungen versehen. Besonders vorteilhaft ist zumindest die zweite Flachseite im vorderen Bereich des Sinkkörpers mit Strömungsöffnungen versehen. Bei dieser Ausführung ist also diejenige Flachseite des Hohlkörpers, welche der als Tragfläche ausgebildeten ersten Flachseite quasi gegenüber liegt, mit Strömungsöffnungen versehen. Bei weiteren Ausführungen können die erste und/oder zweite Flachseite auch im hinteren Bereich des Hohlkörpers mit Strömungsöffnungen versehen sein.

Ein Sinkkörper dieser Art bietet den besonderen Vorteil, dass dieser bereits beim Ablassen auf einer spiralförmigen Abdriftbahn allmählich bis auf den Meeresgrund absinkt. So stürzt der Sinkkörper beim Eintauchen in das Wasser nicht auf direktem Wege annähernd vertikal bis zum Grund. Vielmehr legt sich der Körper auf Grund der erfindungsgemäßen Gestaltung bereits beim Abdriften bedingt durch die tragflächenartige Gestaltung der ersten Flachseite und der einseitigen Lage des Sinkgewichts an dieser Flachseite im vorderen Bereich schräg, so dass dieser auf einer annähernd auf einem Kegelmantel verlaufenden spiralförmigen Bahn bzw. Bahnbereichen hinab gleitet.

Diese Wirkung wird besonders durch die Strömungsöffnungen an zumindest einer Flachseite des Hohlkörpers weiter begünstigt. Hierdurch werden während der Anströmung und Durchströmung des stromlinienförmig gestreckten Hohlkörpers mit Wasser Verwirbelungen im Bereich der Flachseiten hervorgerufen. Diese bewirken zum einen, dass der stromlinienförmig gestreckte Hohlkörper während des spiralförmigen Abdriftens eine Schräglage einnimmt und sich dabei stärker von der vertikalen hin zur horizontalen Lage neigt. Hierdurch werden wiederum die beim Abdriften erreichbaren Werte der Radien von spiralförmigen Absinkbahnen vergrößert. Zum anderen verursachen die von den Strömungsöffnungen hervorgerufenen Verwirbelungen auch Verstärkungen der in das umgebende Wasser abgegebenen Druckwellen.

Eine solche optimale, von der Horizontalen nicht sehr stark abweichende schräge Abdriftlage wird besonders dann hervorgerufen, wenn zumindest diejenige Flachseite mit Strömungsöffnungen versehen ist, welche im vorderen Bereich auf dem Mantel des Hohlkörpers der als Tragfläche ausgebildeten Flachseite quasi gegenüber liegt. Auf einer Abdriftbahn kommt dann die erste Flachseite, welche durch das Sinkgewicht einseitig und kopflastig beschwert ist, quasi unten zu liegen. Auf dieser gleitet der Angelköder ab, während die mit Strömungsöffnungen versehene zweite Flachseite dann oben liegt. Durch Wasserverwirbelungen an den Strömungsöffnungen auf dieser zweiten Flachseite wird ein Strömungswiderstand hervorgerufenen, der eine Ausrichtung des Sinkkörpers in horizontaler Richtung begünstigt.

Der erfindungsgemäße Angelköder driftet somit gleitend entlang einer spiralähnlichen Bahn ab. Dabei kann der Radius der Spiralbahn auch kontinuierlich zunehmen. Abhängig vom Gewicht des erfindungsgemäßen Angelköders und den aktuellen Bedingungen im Fanggebiet, insbesondere Wassertiefe und Strömung, kann der Radius der Spiralbahn des Köders bei einer Sinktiefe von ca. 20 m z.B. einen Wert von 0,5 m bzw. bei einer Sinktiefe von ca. 200 m z.B. einen Wert von 5 m einnehmen. Wird während des Ablassens z.B. der Freilauf der Angelschnur des erfindungsgemäßen Köders geringfügig verzögert bzw. wieder frei gegeben, so kann auch eine allmähliche Abnahme bzw. erneute Zunahme des Radius der spiralförmigen Absinkbahn hervorgerufen werden. Der erfindungsgemäße Angelköder durchläuft somit bereits beim Ablassen auf den Meeresgrund ein großes, u.U. mehrfach kegelförmiges bzw. annähernd zylinderförmiges Wasservolumen. Dieser Raum bildet das Fanggebiet, so dass bereits beim Ablassen des Köders Fische, welche sich in unterschiedlichen Wassertiefen aufhalten, über größere Entfernungen angelockt werden. Dies wird weiter durch die erhöhten Druckwellen gefördert, welche durch die hohe Driftgeschwindigkeit des Köders während der Durchquerung des Fanggebiets hervorgerufen werden.

Weiterhin ist es vorteilhaft, wenn der Sinkkörper im hinteren Bereich als eine Art Ruder ausgebildet ist. Hiermit können die strömungstechnischen Eigenschaften des Hohlkörpers besondere beim Abdriften positiv beeinflusst werden. Durch eine geeignete Auswahl der Größe dieses als Runder wirkenden Bereichs des Hohlkörpers, u.U. abhängig von dessen jeweiliger Größe und Gewicht, kann die Neigung des Angelköders während des Abdriftens, und damit Form und Ausmaß der spiralförmigen Abdriftbahn beeinflusst werden.

Vorteilhaft ist der Hohlkörper des künstlichen Angelköders aus zwei Halbschalen gebildet, welche die erste und zweite Flachseite darstellen. Hierdurch wird die Herstellung des erfindungsgemäßen Köders erleichtert. Einerseits kann dabei das Sinkgewicht z.B. durch eine Verfüllung des vorderen Bereichs einer Flachseite mit einem verflüssigten Metall, z.B. Blei, auf einfache Weise einseitig eingebracht werden. Weiterhin können Strömungsöffnungen in jeweils gewünschter Dichte und Durchmesser an ausgewählten Bereichen der Halbschalen z.B. in Form von Bohrungen eingebracht werden.

Weiterhin können die beiden Halbschalen mit einem gegebenenfalls leicht zu öffnenden Verschluss zum gesamten stromlinienförmigen Hohlkörper verbunden werden. Beim praktischen Gebrauch kann der Verschluss geöffnet werden, um z.B. tierische Köder in das Innere des Hohlraumes oder auch aktive bzw. passive Leuchtmittel einzulegen.

Das Prinzip der Erfindung und weitere vorteilhafte Ausführungen derselben werden nachfolgend an Hand eines in den Figuren dargestellten Ausführungsbeispiels näher erläutert. Dabei zeigen
- Fig. 1a: eine Draufsicht auf eine zweite Flachseite des stromlinienförmigen Hohlkörpers, bevorzugt mit Strömungsöffnungen sowohl im vorderen als auch im hinteren Bereich,
- Fig. 1b: eine Draufsicht auf eine erste Flachseite des stromlinienförmigen Hohlkörpers, bevorzugt mit einer als Tragfläche ausgebildeten Außenseite und einem Sinkgewicht im vorderen Bereich und mit Strömungsöffnungen im hinteren Bereich,
- Fig. 2: einen Querschnitt durch den Hohlkörper,
- Fig. 3: eine Seitenansicht des Hohlkörpers während des Abdriftens,
- Fig. 4: Querschnitt durch Hohlkörper in Abdriftenlage, und
- Fig. 5: eine beispielhafte Abdriftbahn des erfindungsgemäßen Angelköders während eines Angelvorganges.

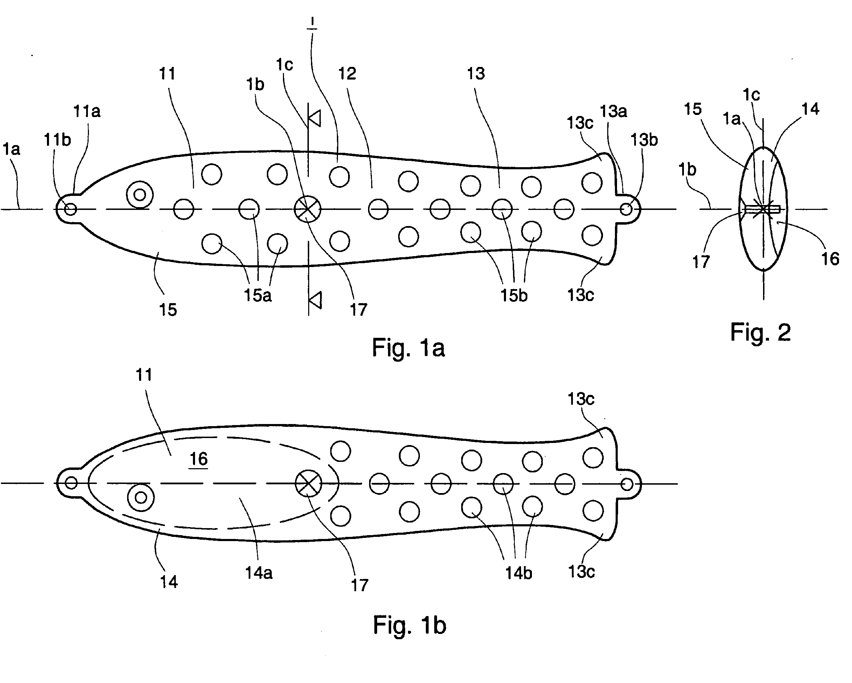

An Hand der Figuren 1a, 1b, 2 wird nachfolgend eine besonders vorteilhafte Ausführung eines gemäß der Erfindung gestalteten Angelköders erläutert. Dabei weisen die Flachseiten 14, 15 des als Hohlkörper 1 ausgebildeten Sinkkörpers vorteilhaft die Form von zwei Halbschalen 14, 15 auf. Besonders vorteilhaft können diese auch übereinstimmende Konturen aufweisen, wodurch die Herstellung begünstigt wird. In den Figuren 1a, 1b sind die Halbschalen 14, 15, deren Außenseiten zugleich die Flachseiten des stromlinienförmig gestreckten Hohlkörpers 1 darstellen, in Draufsichten dargestellt. Fig. 2 zeigt einen Querschnitt durch den Hohlkörper 1.

Das äußerste Ende des vorderen Bereiches 11 am Sinkkörper 1, das auch als Kopf- bzw. Sinkbereich bezeichnet werden kann, ist vorteilhaft als ein Hakenende 11a mit einer Öse 11b zur Anbringung eines Fangmittels ausgeführt, z.B. eines Angelhakens oder eines Drillings. Entsprechend ist das äußerste Ende des hinteren Bereiches 13 am Sinkkörper 1, das auch als Schwanz- bzw. Ruderbereich bezeichnet werden kann, vorteilhaft als ein Schnurende 13a mit einer Öse 13b zur Anbringung eines Haltemittels ausgeführt, z.B. einer Angelschnur. Gemäß einer weiteren Ausführung der Erfindung, welche in den Figuren bereits dargestellt ist, ist der flache Hohlkörper am Ende des hinteren Bereiches 13 zusätzlich ruderartig verbreitert. Schließlich ist der mittlere Übergangsbereich 12 zwischen vorderem und hinterem Bereich 11, 13 des Hohlkörpers, der auch als ein Körper- bzw. Brustbereich bezeichnet werden kann, in einer Hochrichtung einlang einer Hochachse 1c verdickt. Der flache Sinkkörper 1 in dem gezeigten Ausführungsbeispiel weist somit eine stromlinienförmig gestreckte Form beispielhaft in der Gestalt eines Fisches auf. Dessen Geometrie ist gekennzeichnet zum einen durch eine Längsachse 1a, welche gemäß den Darstellungen in Fig. 1a, 1b und 2 vom Hakenende 11a durch die vorderen, mittleren und hinteren Bereiche 11, 12 und 13 bis zum Schnurende 13a verläuft. Diese Längsachse 1a kennzeichnet zugleich die Hauptdriftrichtung des Sinkkörpers im Wasser. Die Geometrie des Sinkkörpers 1 ist zudem gekennzeichnet durch eine Quer- und eine Hochachse 1b, 1c. Diese sind im Beispiel der Figuren 1a, 1b und 2 im mittleren Bereich 12 des Körpers dargestellt. Vorteilhaft fällt die Hochachse 1c mit den Auflageflächen der Flachseiten 14, 15 zusammen. Vorteilhaft ist der Sinkkörper entlang der Hochachse 1c verbreitert, weist also einen größeren Durchmesser auf, bzw. ist entlang der Querachse 1b eingeschnürt, weist also einen reduzierten Querschnitt auf. Es ergibt sich somit ein hochgestellter, seitlich flacher Strömungsquerschnitt wie in Fig. 2 dargestellt.

Der stromlinienförmig gestreckte Sinkkörper 1 weist erfindungsgemäß eine erste bzw. zweite Flachseite 14, 15 auf, die jeweils in den Figuren 1b bzw. 1a in einer Draufsicht gezeigt sind. Zudem ist eine der Flachseiten, im Beispiel der Figuren die erste Flachseite 14, im vorderen Bereich 11 mit einem Sinkgewicht 16 versehen. Deren Außenseite wirkt dann während des spiralförmigen Absinkens des erfindungsgemäßen Angelköders als eine Art Tragfläche, und weist hierzu vorteilhaft eine glatte, geschlossene Oberfläche auf.

Gemäß einer besonders vorteilhaften, in den Figuren bereits dargestellten Ausführung sind die Flachseiten 14, 15 des Hohlkörpers als bevorzugt formgleiche, aufeinander liegende Halbschalen ausgebildet. Diese sind in den Figuren 1b, 1a gezeigt, und stellen zugleich die rechte bzw. linke Flachseite 14, 15 des Hohlkörpers gemäß der Schnittdarstellung von Fig. 2 dar. Erfindungsgemäß ist im vorderen Bereich einer der beiden Flachseiten, bei dem dargestellten Beispiel im vorderen Bereich 11 der rechten Flachseite 14 zudem ein Sinkgewicht 16 eingebracht. In Fig. 1b ist das Sinkgewicht 16 in strichlierter Linie dargestellt. Dabei kann es sich um einen separaten Körper handeln. Sind die beiden Halbschalen des Strömungskörpers aus einem Metall gefertigt, z.B. aus einem Edelstahl, so kann das Sinkgewicht 16 z.B. durch einen Verguss mit verflüssigtem Blei in das Inneren der ersten Halbschale 14 eingebracht werden. Andererseits kann die Flachseite auch direkt als Sinkgewicht ausgebildet sein, indem diese entsprechend dickwandig ausgeführt ist.

Das Sinkgewicht 16 ist im Inneren des gestreckten Hohlkörpers 11 sowohl relativ zur Längsachse 1a, als auch relativ zur Querachse 1b des Körpers unsymmetrisch platziert. Das Sinkgewicht liegt somit zumindest bezüglich zweier Raumrichtungen deutlich außerhalb des Schwerpunktes des Körpers. So ist das Sinkgewicht 11, wie aus den Fig. 1a und 1b ersichtlich, auf der Längsachse 1a nicht z.B. im Zentrum den Hohlkörpers etwa im mittleren Bereich 12, sondern außermittig im vorderen Kopfbereich 11 des stromlinienförmigen Hohlkörpers platziert. Weiterhin ist das Sinkgewicht 11, wie aus der Fig. 2 ersichtlich, nicht im Zentrum des Hohlkörpers, z.B. etwa im Schnittpunkt von Quer- und Hochachsen 1b und 1c, sondern außermittig auf der rechten Seite und somit einseitig in der Halbschale der ersten Flachseite 14 platziert.

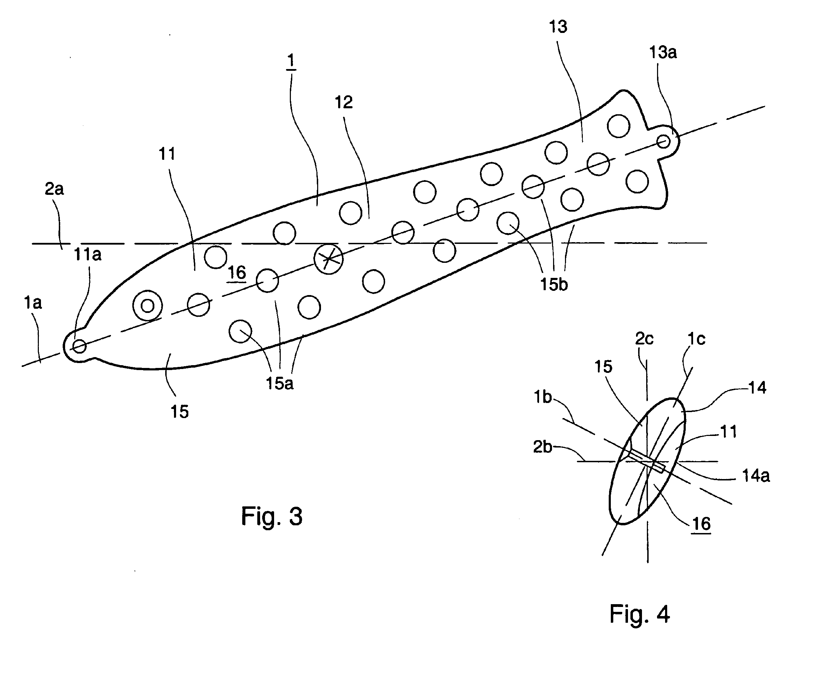

Diese Platzierung des Sinkgewichts 11 hat zur Folge, dass der Sinkkörper 1 beim Abtrudeln bis auf einen Meeresgrund eine Schräglage bezüglich zweier Raumachsen einnimmt. Dabei beschreibt er eine Absinkbahn, welche annähernd spiralförmig ist bzw. zumindest spiralförmige Bereiche aufweist. Mögliche Schräglagen sind in den Figuren 3 und 4 veranschaulicht. So bewirkt die Lage des Sinkgewichts im Inneren des Hohlkörpers beim Absinken zum einen ein Abkippen nach vorne, also eine Auslenkung der Längsachse 1a gegenüber der ersten Horizontalachse 2a, wie in Fig. 3 dargestellt. Des Weiteren wird durch die einseitige Platzierung des Sinkgewichts eine Neigung des flachen Hohlkörpers verursacht, also eine Auslenkung von Quer- und Hochachse 1b, 1c gegenüber der zweiten Horizontalachse 2b und der Vertikalachse 2c, wie im Querschnitt der Fig. 4 dargestellt. Während des Abtrudelns legt sich der flache stromlinienförmige Sinkkörper somit derart auf die Seite, dass dabei zumindest die erste Flachseite auf der geschlossenen Oberfläche 14a der Halbschale 14 als eine Art Tragfläche wirkt. Hierdurch wird der abtrudelnde Sinkkörpers auf eine gekrümmte, annähernd spiralförmige Absinkbahn gezwungen, welche annähend entlang eines Kegelmantels verläuft.

Diese Wirkung wird gemäß der Erfindung dadurch verstärkt, dass die Wandung zumindest einer Flachseite des Hohlkörpers zusätzlich mit Strömungsöffnungen durchsetzt ist. Mögliche Verteilungen derartiger Strömungsöffnungen sind im Beispiel der Figuren 1a, 1b und 3 gezeigt. Dabei ist die Halbschale der zweite Flachseite 15 bei der dargestellten Ausführung beispielhaft sowohl im vorderen als auch im hinteren Bereich mit Strömungsöffnungen 15a, 15b versehen. Demgegenüber ist die Halbschale der ersten Flachseite 14 nur im hinteren Bereich mit Strömungsöffnungen 14b versehen, während die Oberfläche 14a des vorderen Bereichs auch wegen des innen liegenden Sinkgewichts 16 geschlossen ist, und als eine Art Tragfläche wirkt.

Während des Abdriftens dringt also Wasser in die Strömungsöffnungen ein bzw. verwirbelt in diesen. Bei der in den Figuren dargestellten Ausführung für einen gemäß der Erfindung ausgeführten Angelköder dringt der Wasserstrom insbesondere in die am Kopfbereich befindlichen Strömungsöffnungen ein, durchströmt den Hohlkörper und tritt insbesondere aus den am hinteren Ende 13 befindlichen Strömungsöffnungen wieder aus. Hierdurch werden auch Wasserverwirbelungen auf der Außenseite verursacht, und somit ein glattes Vorbeiströmen des Wassers verhindert. Im Ergebnis wird somit die Abdriftgeschwindigkeit des Angelköders auf einer Oberseite durch einen erhöhten Wasserwiderstand asymmetrisch gehemmt, und somit das Einnehmen der oben beschriebenen Schräglage hervorgerufen.

Bei einer weiteren Ausführung der Erfindung können die Flachseiten 14, 15 auch lösbar miteinander verbunden sein. Bei dem in den Figuren dargestellten Beispiel ist hierzu vorteilhaft eine Verbindungsschraube 17 vorhanden, um die aufeinander liegenden Flachseiten zu einem geschlossenen Sinkkörper verbinden zu können. Eine derartige zweiteilige Ausführung bietet Vorteile bei der praktischen Anwendung des Angelköders. So können im noch geöffneten Zustand in die bevorzugt als Halbschalen ausgebildeten Flachseiten Lockmittel unterschiedlichster Art eingelegt werden, z.B. tierische Köder oder Lockstoffe in flüssiger Form, die z.B. in einem Schwamm als Träger gehalten sind. Es können auch Leuchtmittel oder akustische Köder, wie Klangkörper, Rasseln, u.s.w., eingelegt werden. Nach einer Verbindung der Halbschalen werden diese Lockmittel nahezu unverlierbar im Hohlraum gehalten. Dennoch kann sich die davon hervorgerufene Lockwirkung, z.B. eine Duft-, Leucht- oder Klangspur, auf Grund der Durchspülung des Hohlraumraumes über die Strömungsöffnungen bei einer Köderbewegung nahezu ungehindert ausbreiten. Weiterhin ist es durch vorübergehendes Lösen der Verbindungsmittel auf einfache Weise möglich, Lockmittel auszutauschen, z.B. um ein auf eine bestimmte Fischart wirkendes Lockmittel in den Hohlraum einzusetzen.

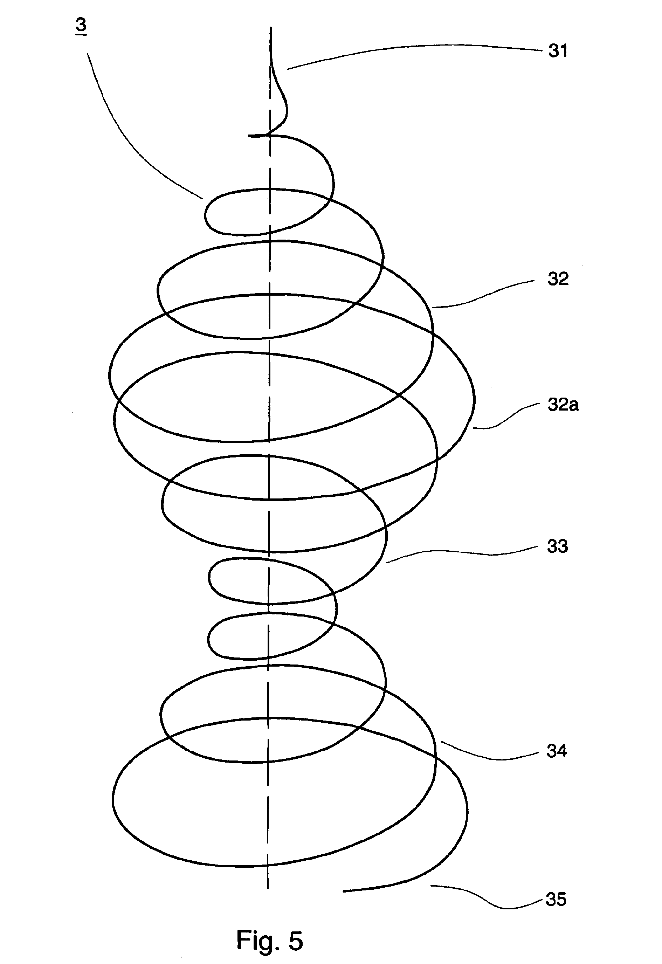

Fig. 5 zeigt eine beispielhafte Absinkbahn 3. Während der erfindungsgemäße Angelköder im Eintauchbereich 31 unterhalb der Wasseroberfläche zunächst eine nur kurze Strecke annähernd vertikal abstürzt, beginnt er sich auf der weiteren Bahn auf Grund der oben beschriebenen Tragflächenwirkung zu neigen. Gleichzeitig wird seine Abdriftgeschwindigkeit durch die Strömungsöffnungen einseitig gehemmt. Hierdurch bedingt beschreibt der Sinkkörper im dargestellten Beispiel nun eine erste spiralförmige Absinkbahn 32 mit zunehmendem Bahnradius. Diese nimmt im Bahnbereich 32a einen maximal möglichen Bahnradius ein. Würde ein Benutzer nun den freien Auslauf von Angelschnur geringfügig verzögern, so würde sich ein zweiter Bahnbereich 33 mit abnehmendem Bahnradius ergeben. Würde die Angelschnur dann wieder ungehindert auslaufen, so schließt sich ein dritter Bahnbereich 34 mit wieder zunehmendem Bahnradius bis zum Erreichen eines Grundes 35 an.

Dieses allmähliche, kontrollierte und durch Eingriffe eines Anglers beeinflussbare Abgleiten und die dabei erzielbaren Radien spiralförmiger Absinkbahnen können weiter verbessert werden, wenn der hintere Bereich 13 des stromlinienförmigen Hohlkörpers zusätzlich eine ruderartige Verbreiterung aufweist. Diese wird bei der in den Figuren dargestellten vorteilhaften Ausführung durch eine taillenartige Einschnürung der übereinander liegenden Flachseiten entlang der Hochachse 1c zwischen dem kopfartigen vorderen Bereich 11 und dem schwanzartigen hinteren Bereich 13 des Hohlkörpers 1 erzielt.

Der erfindungsgemäße Angelköder durchwandert somit während des Abtrudelns bis zum Grund eines Meeres oder Gewässers zumindest bereichsweise annähernd kegelmantelförmige bzw. zylinderförmige Volumenbereiche. Hierdurch wird ein im Vergleich zu herkömmlichen künstlichen Angelködern erheblich größeres Fanggebiet beschrieben.

### Bezugszeichenliste

- 1: Sinkkörper des Angelköders
- 1a: Längsachse des Körpers
- 1b: Querachse des Körpers
- 1c: Hochachse des Körpers
- 2a, 2b: erste, zweite Horizontalachse
- 2c: Vertikalachse auf der Ebene der Horizontalachsen 2a, 2b
- 11: vorderer Bereich, Sinkbereich (Kopfbereich)
- 11a: Hakenende
- 11b: Öse zur Anbringung eines Angelhakens, insbesondere Drillings
- 12: mittlerer Übergangsbereich (Körperbereich)
- 13: hinterer Bereich, Ruderbereich (Schwanzbereich)
- 13a: Schnurende
- 13b: Öse zur Anbringung einer Angelschnur
- 13c: ruderartige Verbreiterung
- 14: erste Flachseite des Hohlkörpers, insbesondere erste Halbschale
- 14a: Geschlossene Oberfläche (Tragfläche) im vorderen Bereich
- 14b: Strömungsöffnungen im hinteren Bereich
- 15: zweite Flachseite des Hohlkörpers, insbesondere zweite Halbschale
- 15a: Strömungsöffnungen im vorderen Bereich
- 15b: Strömungsöffnungen im hinteren Bereich
- 16: Sinkgewicht
- 17: Verbindungselement für Halbschalen 14, 15
- 3: spiralförmige Absinkbahn
- 31: Eintauchbereich
- 32: erste Bahnbereich mit zunehmendem Bahnradius
- 32a: Bahnbereich mit maximalem Bahnradius
- 33: zweite Bahnbereich mit abnehmendem Bahnradius
- 34: dritte Bahnbereich mit zunehmendem Bahnradius
- 35: Grundbereich

## Patentansprüche

1. Künstlicher Angelköder mit einem Sinkkörper (1), welcher aufweist einen vorderen Bereich (11), an dessen Ende (11a) Fangmittel (11b) anbringbar sind, insbesondere ein Drilling, und einen hinteren Bereich (13), an dessen Ende (13a) Haltemittel (13b) anbringbar sind, insbesondere eine Angelschnur, und der ausgeführt ist als
- ein stromlinienförmig gestreckter Hohlkörper (1) mit einer ersten und zweiten Flachseite (14, 15), wobei
- die erste Flachseite (14) zumindest im vorderen Bereich (11) auf der Außenseite als eine Art Tragfläche (14a) ausgebildet und mit einem Sinkgewicht (16) versehen ist, **gekennzeichnet dadurch, dass** zumindest eine Flachseite (14, 15) Strömungsöffnungen (14b, 15a, 15b) aufweist.

2. Angelköder nach Anspruch 1, mit Strömungsöffnungen (15a) im vorderen Bereich (11) der zweiten Flachseite (15).

3. Angelköder nach Anspruch 1 oder 2, mit Strömungsöffnungen (14b; 15b) im hinteren Bereich (13) der ersten und/oder zweiten Flachseite (14; 15).

4. Angelköder nach einem der vorangegangenen Ansprüche, wobei der Sinkkörper (1) im hinteren Bereich (13) ruderartig ausgebildet ist.

5. Angelköder nach einem der vorangegangenen Ansprüche, wobei die Flachseiten (14, 15) als Halbschalen ausgebildet sind.

6. Angelköder nach Anspruch 5, wobei die Flachseiten (14,15) übereinstimmende Konturen aufweisen.

7. Angelköder nach Anspruch 5 oder 6, wobei die Flachseiten (14, 15) lösbar verbunden sind.

8. Angelköder nach Anspruch 7, mit einer Verbindungsschraube (17) als lösbare Verbindung.

9. Angelköder nach einem der vorangegangenen Ansprüche, wobei das Sinkgewicht (16) innerhalb des Hohlkörpers (1) im vorderen Bereich (11) der ersten Flachseite (14) angeordnet ist.

10. Angelköder nach einem der vorangegangenen Ansprüche, wobei die erste Flachseite (14) im vorderen Bereich (11) als Sinkgewicht (16) ausgebildet ist.

11. Angelköder nach einem der vorangegangenen Ansprüche, wobei die Flachseiten (14, 15) zumindest im vorderen Bereich (11) des Hohlkörpers (1) einen annähernd ovalen Querschnitt aufweisen.

12. Angelköder nach einem der vorangegangenen Ansprüche, wobei der Hohlkörper (1) im Querschnitt entlang einer Hochachse (1c) einen größeren Durchmesser aufweist als entlang einer Querachse (1b).

13. Angelköder nach Anspruch 12, wobei die Hochachse (1c) der Auflageflächen der Flachseiten (14, 15) entspricht.

## Claims

1. Artificial fishing bait with a sinking body (1) which has a front region (11), at the end (11a) of which can be fitted catching means (11b), in particular a treble hook, and a rear region (13), at the end (13a) of which can be fitted retaining means (13b), in particular a fishing line, and is configured as
- a streamlined-elongate hollow body (1) with a first and second flat side (14, 15), wherein
- the first flat side (14), at least in the front region (11), on the outside, is designed as a kind of carrying surface (14a) and is provided with a sinker (16), **characterized in that**
at least one flat side (14, 15) has flow openings (14b, 15a, 15b).

2. Fishing bait according to Claim 1, with flow openings (15a) in the front region (11) of the second flat side (15).

3. Fishing bait according to Claim 1 or 2, with flow openings (14b; 15b) in the rear region (13) of the first and/or second flat sides (14; 15).

4. Fishing bait according to one of the preceding claims, wherein the sinking body (1), in the rear region (13), is of rudder-like design.

5. Fishing bait according to one of the preceding claims, wherein the flat sides (14, 15) are designed in the form of half-shells.

6. Fishing bait according to Claim 5, wherein the flat sides (14, 15) have corresponding contours.

7. Fishing bait according to Claim 5 or 6, wherein the flat sides (14, 15) are connected in a releasable manner.

8. Fishing bait according to Claim 7, with a connecting screw (17) forming the releasable connection.

9. Fishing bait according to one of the preceding claims, wherein the sinker (16) is arranged within the hollow body (1) in the front region (11) of the first flat side (14).

10. Fishing bait according to one of the preceding claims, wherein the first flat side (14), in the front region (11), is designed in the form of a sinker (16).

11. Fishing bait according to one of the preceding claims, wherein the flat sides (14, 15), at least in the front region (11) of the hollow body (1), have a more or less oval cross section.

12. Fishing bait according to one of the preceding claims, wherein the hollow body (1), as seen in cross section, has a larger diameter along a vertical axis (1c) than it does along a transverse axis (1b).

13. Fishing bait according to Claim 12, wherein the vertical axis (1c) corresponds to the bearing surfaces of the flat sides (14, 15).

## Revendications

1. Appât artificiel avec un corps plongeant (1), qui présente une région antérieure (11), à l'extrémité (11a) de laquelle des moyens de capture (11b) peuvent être installés, en particulier un hameçon triple, et une région postérieure (13), à l'extrémité (13a) de laquelle un moyen de retenue (13b) peut être installé, en particulier un fil de pêche, et qui est réalisé sous la forme de
- un corps creux allongé (1) de forme fuselée avec un premier et un deuxième côtés plats (14, 15), dans lequel
- le premier côté plat (14) est réalisé sous forme de face portante (14a) sur le côté extérieur au moins dans la région antérieure (11) et est pourvu d'un poids de lestage (16),
**caractérisé en ce qu'**au moins un côté plat (14, 15) présente des ouvertures d'écoulement (14b, 15a, 15b).

2. Appât selon la revendication 1, avec des ouvertures d'écoulement (15a) dans la région antérieure (11) du deuxième côté plat (15).

3. Appât selon la revendication 1 ou 2, avec des ouvertures d'écoulement (14b; 15b) dans la région postérieure (13) du premier et/ou du deuxième côté plat (14; 15).

4. Appât selon l'une quelconque des revendications précédentes, dans lequel le corps plongeant (1) se présente dans la région postérieure (13) sous la forme d'une rame.

5. Appât selon l'une quelconque des revendications précédentes, dans lequel les côtés plats (14, 15) se présentent sous la forme de demi-coquilles.

6. Appât selon la revendication 5, dans lequel les côtés plats (14, 15) présentent des contours concordants.

7. Appât selon la revendication 5 ou 6, dans lequel les côtés plats (14, 15) sont assemblés de façon séparable.

8. Appât selon la revendication 7, avec une vis d'assemblage (17) comme jonction séparable.

9. Appât selon l'une quelconque des revendications précédentes, dans lequel le poids de lestage (16) est disposé à l'intérieur du corps creux (1) dans la région antérieure (11) du premier côté plat (14).

10. Appât selon l'une quelconque des revendications précédentes, dans lequel le premier côté plat (14) se présente sous la forme d'un poids de lestage (16) dans la région antérieure (11).

11. Appât selon l'une quelconque des revendications précédentes, dans lequel les côtés plats (14, 15) présentent, au moins dans la région antérieure (11) du corps creux (1), une section transversale quasiment ovale.

12. Appât selon l'une quelconque des revendications précédentes, dans lequel le corps creux (1) présente, en coupe transversale, un plus grand diamètre le long d'un axe principal (1c) que le long d'un axe transversal (1b).

13. Appât selon la revendication 12, dans lequel l'axe principal (1c) correspond aux faces d'appui des côtés plats (14, 15).
